# EUROPÄISCHE PATENTSCHRIFT

(11) **EP 3 663 243 B1**
(45) Veröffentlichungstag und Bekanntmachung des Hinweises auf die Patenterteilung: **06.09.2023**
(21) Anmeldenummer: 19212787.6
(22) Anmeldetag: 02.12.2019
(51) Int. Cl.: B65H 19/18, B29C 65/78, B29C 65/00, B29C 65/50

(54) **VERFAHREN UND VORRICHTUNG ZUM SPLEISSEN VON EINEM ERSTEN UND EINEM ZWEITEN FOLIENVERBUND**
METHOD AND DEVICE FOR SPLICING A FIRST AND A SECOND FILM COMPOSITE
PROCÉDÉ ET DISPOSITIF D'ÉPISSURE D'UN PREMIER ET D'UN DEUXIÈME FILMS COMPOSITES

(30) Priorität: 03.12.2018 DE 102018130674
(43) Veröffentlichungstag der Anmeldung: 10.06.2020
(73) Patentinhaber: Bundesdruckerei GmbH, 10969 Berlin (DE)
(72) Erfinder: Sengstock, Norbert, 12353 Berlin (DE); Märtens, Detlef, 13599 Berlin (DE)
(74) Vertreter: Mammel und Maser Patentanwälte PartG mbB

(56) Entgegenhaltungen:
- DE-A1- 19 962 413
- US-A- 5 698 060
- US-A1- 2007 044 898

## Beschreibung

Die Erfindung betrifft ein Verfahren und eine Vorrichtung zum Spleißen von einem Ende eines ersten Folienverbundes mit einem Anfang eines zweiten Folienverbundes.

Aus der US 2007/044898 A1 sind ein Verfahren und eine Vorrichtung zum Spleißen eines Endes eines ersten Folienverbundes mit einem Anfang eines zweiten Folienverbundes bekannt. Dabei wird der erste Folienverbund durch die Spleißvorrichtung hindurchgeführt und der Anfang des zweiten Folienverbundes ebenfalls der Spleißvorrichtung zugeführt.

Der erste und zweite Folienverbund werden auf Stoß geschnitten, wobei das Ende des ersten Folienverbundes und der Anfang des zweiten Folienverbundes gleichzeitig einer Verbindungsstation zugeführt werden, in welcher mit einer Walze ein erstes Verbindungselement auf den Stoß aufgebracht wird. Nachfolgend wird mit einer gegenüberliegenden Walze in der Verbindungsstation ein weiteres gegenüberliegendes Verbindungselement auf den Stoß aufgebracht.

Aus der US 5,980,060 A ist des Weiteren eine Spleißvorrichtung bekannt, welche zum Spleißen von einem Ende eines ersten Folienverbundes mit einem Anfang eines zweiten Folienverbundes vorgesehen ist. Dabei wird in einem ersten Walzenpaar ein Stoß geschnitten und einseitig auf diesem Stoß ein Verbindungselement aufgebracht sowie nachfolgend an einem weiteren getrennt dazu angeordneten Walzenpaar auf der gegenüberliegenden Seite ein weiteres Verbindungselement auf den Stoß aufgebracht.

Aus der DE 199 62 413 A1 ist ein Verfahren einer Vorrichtung zur Herstellung eines Folienverbundes bekannt, bei welchem der Folienverbund zumindest eine Polymerschicht umfasst, die bearbeitet, insbesondere mit einem Hologramm versehen wird. Zum kontinuierlichen Betrieb dieser Vorrichtung ist eine erste und zweite Vorratsrolle für den Folienverbund vorgesehen, die aufeinanderfolgend einer Spleißvorrichtung zugeführt werden. Sofern die erste Vorratsrolle aufgebraucht ist, kommt die zweite Vorratsrolle zum Einsatz. In der Spleißvorrichtung wird eine Stoß-an-Stoß-Verbindung von dem Ende des Folienverbundes der ersten Vorratsrolle zum Anfang des zweiten Folienverbundes von der zweiten Vorratsrolle erzeugt. Während der Herstellung dieser Stoß-an-Stoß-Verbindung kommt es zu einem kurzen Stillstand. Da die Verarbeitung des Folienverbundes kontinuierlich erfolgt, ist der Spleißvorrichtung eine Speicherstation nachgeschaltet, so dass während des kurzzeitigen Stillstandes der Spleißvorrichtung die nachfolgenden Bearbeitungsstationen kontinuierlich aus der Speichervorrichtung mit dem Folienverbund versorgt werden.

Der Erfindung liegt die Aufgabe zugrunde, ein Verfahren und eine Vorrichtung zum Spleißen von einem Ende eines ersten Folienverbundes mit einem Anfang des zweiten Folienverbundes vorzuschlagen, wodurch ein Wechsel der Vorratsrollen von einem ersten Folienverbund auf einen zweiten Folienverbund ohne Stillstand von nachfolgenden Bearbeitungsstationen ermöglicht ist.

Diese Aufgabe wird durch ein Verfahren zum Spleißen von dem einen Ende des ersten Folienverbundes mit dem Anfang des zweiten Folienverbundes in einer Spleißvorrichtung mit folgenden Schritten gelöst. Der erste Folienverbund wird durch die Spleißvorrichtung hindurchgeführt. Der Anfang des zweiten Folienverbundes wird der Spleißvorrichtung zugeführt. Der erste Folienverbund und der zweite Folienverbund werden auf Stoß geschnitten. Der durch das Ende des ersten Folienverbundes und durch den Anfang des zweiten Folienverbundes gebildete Stoß werden gemeinsam einer Verbindungsstation zugeführt. In der Verbindungsstation wird ein- oder beidseitig an einer Außenseite des ersten und zweiten Folienverbundes und den Stoß des ersten und zweiten Folienverbundes überdeckend ein Verbindungselement aufgebracht. Durch dieses Spleißverfahren kann eine Anbindung des Anfangs des zweiten Folienverbundes an das Ende des ersten Folienverbundes für einen unterbrechungsfreien Fertigungsablauf erfolgen. Ein Stillstand des Spleißprozesses ist nicht erforderlich. Durch die aufeinanderfolgenden Arbeitsschritte in der Spleißvorrichtung kann ein kontinuierliches Hindurchführen des ersten und zweiten Folienverbundes ermöglicht sein, wobei gleichzeitig durch das Aufbringen des zumindest einen Verbindungselementes auf der Außenseite des ersten und zweiten Folienverbundes eine einfache Verbindung des Stoßes von dem ersten und zweiten Folienverbund ermöglicht wird.

Bevorzugt ist vorgesehen, dass die Verbindungsstation eine Halteeinrichtung und ein Gegenhalteelement oder zwei einander gegenüberliegende Halteeinrichtungen umfasst, die einen Arbeitsspalt bilden und der erste und zweite Folienverbund in den Arbeitsspalt hineingeführt werden, wobei das Verbindungselement durch eine Haltekraft der Halteeinrichtung bis zum Einbringen in den Arbeitsspalt gehalten wird. Die Halteeinrichtung kann als Walze ausgebildet sein. Das Gegenhalteelement kann beispielsweise als ein Anschlag, ein plattenförmiges Element oder Walze ausgebildet sein. Diese Anordnung ermöglicht eine einfache Überführung des Verbindungselementes in den Arbeitsspalt bei einer kontinuierlichen Hindurchführung des Stoßes durch den Arbeitsspalt und ein sicheres Aufbringen des Verbindungselementes, so dass das Verbindungselement sowohl an dem Ende des ersten Folienverbundes als auch an dem Anfang des zweiten Folienverbundes angreift und den Stoß überdeckt.

Gemäß einer bevorzugten Ausführungsform der Halteeinrichtung ist vorgesehen, dass diese als Vakuumwalze ausgebildet wird, bei der durch Anlegen eines Unterdrucks eine Haltekraft zur Aufnahme des zumindest einen Verbindungselements an einer Umfangfläche der Vakuumwalze erzeugt wird. Diese ermöglicht sowohl eine schnelle Fixierung des Verbindungselementes an der Vakuumwalze als auch ein einfaches und schnelles Ablösen des Verbindungselementes innerhalb des Arbeitsspaltes zum Anbringen an den ersten und zweiten Folienverbund.

Die als Vakuumwalze bevorzugt ausgebildete Halteeinrichtung kann zur Anhaftung des Verbindungselementes mit Unterdruck beaufschlagt und dann abgeschaltet werden, sobald das Verbindungselement in den Arbeitsspalt übergeführt ist.

Des Weiteren ist bevorzugt vorgesehen, dass als Verbindungselement ein Klebestreifen aufgebracht wird. Dieser Klebestreifen weist vorzugsweise eine einseitige Klebefläche auf. Dadurch kann eine unmittelbare Anbindung bzw. Anhaftung des Verbindungselementes an dem ersten und zweiten Folienverbund erzielt werden.

Bevorzugt wird der als Verbindungselement ausgebildete Klebestreifen an seiner nicht klebrigen Außenseite von der Halteeinrichtung, insbesondere Vakuumwalze, gehalten. Dies ermöglicht ein einfaches Bestücken des Verbindungselementes auf der Halteeinrichtung sowie darauffolgend ein Anbringen an dem ersten und zweiten Folienverbund.

Eine vorteilhafte Ausführungsform des Verfahrens sieht vor, dass in der Verbindungsstation beidseitig und gleichzeitig jeweils an einer Außenseite des Stoßes ein Verbindungselement aufgebracht wird. Dadurch kann ein unbeabsichtigtes Lösen der Verbindungsstelle verhindert werden, insbesondere auch bei ggf. auftretenden Spannungsspitzen der Bahnspannung bei der Weiterverarbeitung des Folienverbundes in nachfolgenden Bearbeitungsstationen.

Zum Schneiden des Stoßes wird der erste Folienverbund durch eine Klemmvorrichtung und in Transportrichtung nachfolgend durch eine Klemmhalteeinrichtung und dieser nachfolgend durch die Verbindungsstation hindurchgeführt, und der zweite Folienverbund wird durch die Klemmvorrichtung hindurch der Klemmhalteeinrichtung zugeführt, so dass zumindest der Anfang des zweiten Folienverbundes in Klemmhalteeinrichtung liegt. Darauffolgend werden die Klemmvorrichtung und die Klemmhalteeinrichtung in eine Arbeitsposition übergeführt bzw. geschlossen. Der erste und zweite Folienverbund sind überlappend zwischen der Klemmvorrichtung und der Klemmhalteeinrichtung positioniert und aneinanderliegend gehalten. Darauffolgend wird mit einer Schneideinrichtung der Stoß eingebracht. Beide Folienverbunde werden gleichzeitig geschnitten. Insbesondere ist ein Schneidmesser zum Einbringen des Stoßes vorgesehen.

Des Weiteren ist vorgesehen, dass nach dem Schneiden des Stoßes die Klemmvorrichtung und die Klemmhalteeinrichtung geöffnet werden, wobei einer der beiden Klemmblöcke der Klemmhalteeinrichtung mit Vakuum beaufschlagt wird und einen geschnittenen Abschnitt am Anfang des zweiten Folienverbundes von der Schnittstelle entfernt wird. Dadurch kann eine kontrollierte Entsorgung eines Reststückes oder des geschnittenen Abschnittes des zweiten Folienverbundes erfolgen. Die Stoßstelle am Anfang des zweiten Folienverbundes ist somit frei und kann unmittelbar zur Stoßstelle am Ende des ersten Folienverbundes positioniert werden.

Eine weitere vorteilhafte Ausgestaltung des Verfahrens sieht vor, dass der Stoß zwischen dem ersten und zweiten Folienverbund von der Klemmhalteeinrichtung mittels Leitblechen in die Verbindungsstation geführt wird. Dadurch kann eine kontrollierte Verfahrbewegung des Stoßes in die Verbindungsstation erfolgen, um darauffolgend das zumindest eine Verbindungselement anzubringen.

Des Weiteren ist bevorzugt vorgesehen, dass beim Überführen des Sto-ßes von der Schnittstelle in die Verbindungsstation eine Zuführwalze oder ein Zuführwalzenpaar des zweiten Folienverbundes und die Vakuumwalzen der Verbindungsstation mit einer synchronen Bahngeschwindigkeit angesteuert werden. Dadurch kann eine kontinuierliche Überführung des Stoßes in die Verbindungsstation erzielt werden. Die Zuführwalze oder das Zuführwalzenpaar des ersten Folienverbundes kann in entgegengesetzter Richtung zur Transportrichtung des Stoßes angetrieben werden, um einen Rest der Vorratsrolle des ersten Folienverbundes aus der Spleißvorrichtung herauszuführen, um darauffolgend einen Wechsel für eine neue Vorratsrolle vorzunehmen.

Bevorzugt wird der Spleißvorrichtung ein erster und zweiter Folienverbund zugeführt, der ein- oder mehrlagig ausgebildet ist, insbesondere einen Dreifachverbund umfasst, der aus einer Trägerschicht, einer Polymerschicht und einer Schutzschicht besteht. Diese Polymerschicht ist insbesondere aus einer holografisch belichteten Schicht gebildet, welche in nachfolgenden Bearbeitungsstationen auf einen Datenträger oder eine Datenkarte nach Ablösen der Trägerschicht und der Schutzschicht aufgebracht wird. Durch die Bildung der Stoßstelle kann eine quasi zerstörungsfreie Anbindung eines Folienverbundes als Dreifachverbund ermöglicht sein.

Die der Erfindung zugrundeliegende Aufgabe wird des Weiteren durch eine Spleißvorrichtung zum Spleißen von einem Ende eines ersten Folienverbundes mit einem Anfang eines zweiten Folienverbundes gelöst, welche zumindest eine Schneidvorrichtung umfasst, durch welche ein gemeinsamer Stoß zwischen dem ersten Folienverbund und dem zweiten Folienverbund herstellbar ist und mit einer Verbindungsstation, die zumindest ein Verbindungselement ein- oder beidseitig auf den Stoß des ersten und zweiten Folienverbundes aufbringt. Durch diese Spleißvorrichtung ist ein Wechsel von einer verbrauchten Vorratsrolle zu einer neuen bzw. vollen Vorratsrolle ohne Stillstand ermöglicht. Dadurch kann eine automatische Anbindung eines ersten Folienverbundes und eines zweiten Folienverbundes geschaffen werden, so dass die der Spleißvorrichtung nachfolgenden Bearbeitungsstationen kontinuierlich den Fertigungsprozess und die weitere Bearbeitung des Folienverbundes fortführen können.

Bevorzugt ist vorgesehen, dass die Verbindungsstation der Spleißvorrichtung eine Halteeinrichtung und ein Gegenhalteelement oder zwei einander gegenüberliegende Halteinrichtungen aufweist, zwischen denen ein Arbeitsspalt zum Aufbringen des zumindest eines Verbindungselements auf den Stoß des ersten Folienverbundes und zweiten Folienverbundes gebildet ist. Dadurch kann während einer kontinuierlichen Hindurchführung des Stoßes zwischen dem ersten und zweiten Folienverbund das zumindest eine Verbindungselement aufgebracht werden, um einen quasi endlosen Folienverbund zu schaffen.

Eine bevorzugte Ausführungsform sieht vor, dass die Halteeinrichtung als eine Vakuumwalze ausgebildet ist, welche eine äußere Gummierung als Mantelfläche umfasst, welche eine Vielzahl von Durchbrechungen aufweist. Dies ermöglicht eine sichere Aufnahme des Verbindungselementes, insbesondere eines Klebestreifens sowie eine Fixierung durch das Anlegen eines Vakuums, wobei durch die Vielzahl von Durchbrechungen auch unterschiedliche Größen des Verbindungselementes von der Vakuumwalze aufgenommen werden können. Dadurch ist eine einfache und flexible Anpassung des Verbindungselementes an die Bahnbreite des ersten und zweiten zu verbindenden Folienverbundes möglich.

Die Halteeinrichtung der Verbindungsstation weist bevorzugt eine Markierung und/oder ein Ausrichtelement zur Bestückung des Verbindungselementes auf. Dadurch ist eine schnelle und einfache Positionierung des Verbindungselementes möglich. Das Ausrichtelement kann beispielsweise bei der als Vakuumwalze ausgebildeten Halteeinrichtung eine Vertiefung in der Mantelfläche sein, so dass ein Anschlag zur Anlage des Verbindungselementes und dadurch der Ausrichtung des Verbindungselementes an der Umfangsfläche der Vakuumwalze gegeben ist.

Des Weiteren ist bevorzugt vorgesehen, dass die Schneideinrichtung zumindest ein Schneidmesser umfasst. Dieses Schneidmesser wird vorzugsweise rechtwinklig zur Erstreckungsebene des ersten und zweiten Folienverbundes für einen sauberen Schnitt zugeführt. Alternativ kann die Schneidvorrichtung auch als eine Laserschneideinrichtung ausgebildet sein. Vorteilhaferweise kann die Schneideinrichtung wie auch die Klemm- und Klemmhalteeinrichtung während des Schnittes eine synchrone Verfahrbewegung in Transportrichtung durchführen.

Des Weiteren ist bevorzugt vorgesehen, dass der Schneideinrichtung eine Klemmhalteeinrichtung zugeordnet ist, welche insbesondere in Transportrichtung des ersten und zweiten Folienverbundes der Schneideinrichtung nachgeschaltet ist und die in eine Öffnungs- und Schließposition überführbar ist. Dadurch kann für die Einbringung des Stoßes in den ersten und zweiten Folienverbund eine einseitige Klemmung des ersten und zweiten Folienverbundes aneinanderliegend erfolgen, so dass durch den gemeinsamen Schnitt in den ersten und zweiten Folienverbund ein exakter Stoß gebildet ist.

Eine vorteilhafte Ausgestaltung der Spleißvorrichtung sieht vor, dass in Transportrichtung des ersten und zweiten Folienverbundes gesehen vor der Schneideinrichtung eine Klemmvorrichtung vorgesehen ist. Dies ermöglicht, dass der erste und zweite Folienverbund vor und nach der Schneidvorrichtung definiert zueinander fixiert werden können, um einen exakten Schnitt einzubringen.

Vorteilhafterweise sind zwischen der Klemmhalteeinrichtung und der Verbindungsstation einander gegenüberliegende Leitbleche vorgesehen, welche vorzugsweise mit Vakuum beaufschlagbar sind. Dadurch wird die Stoßstelle des ersten und zweiten Folienverbundes von der Schnittstelle in die Verbindungsstation übergeführt.

Der Transport der Stoßstelle des ersten und zweiten Folienverbundes von der Schneideinrichtung zur Verbindungsstation wird über die Führungswalze des zweiten Folienverbundes und die zumindest eine Vakuumwalze der Verbindungsstation angesteuert, wobei die Führungswalze des zweiten Folienverbundes und die Vakuumwalzen der Verbindungsstation synchron angesteuert sind. Dadurch kann ein Gleichlauf des Endes des ersten Folienverbundes und des Anfangs des zweiten Folienverbundes bis in die Verbindungsstation erfolgen, um daraufhin das zumindest eine Verbindungselement auf die Stoßstelle aufzubringen.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Ansicht einer Spleißvorrichtung in einem ersten Arbeitsschritt,
- Figur 2: eine schematische Ansicht der Spleißvorrichtung in einem nachfolgenden Arbeitsschritt zu Figur 1,
- Figur 3: eine schematische Ansicht der Spleißvorrichtung in einem weiteren Arbeitsschritt zu Figur 2,
- Figur 4: eine schematische Ansicht der Spleißvorrichtung in einem nachfolgenden Arbeitsschritt zu Figur 3,
- Figur 5: eine schematische Ansicht der Spleißvorrichtung gemäß Figur 1 in einem weiteren nachfolgenden Arbeitsschritt, und
- Figur 6: eine schematische Ansicht einer Verbindungsstelle zwischen einem ersten und zweiten Folienverbund.

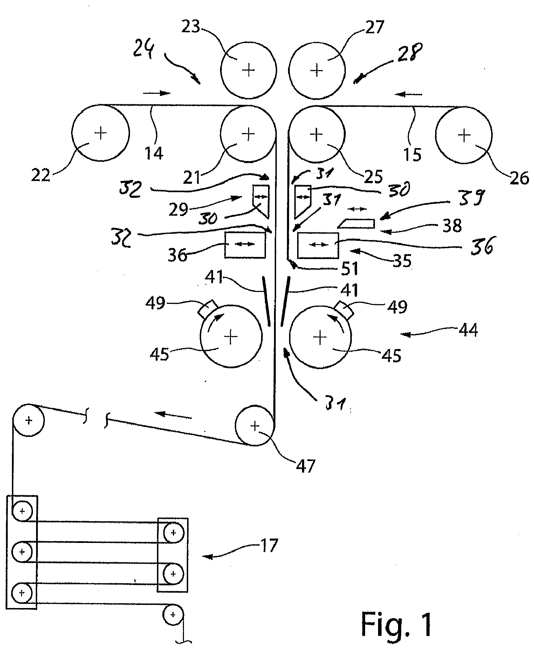

In den Figuren 1 bis 5 ist schematisch eine Spleißvorrichtung 11 dargestellt, welche aufeinanderfolgende Arbeitsschritte zeigt. Diese Spleißvorrichtung 11 verbindet einen ersten Folienverbund 14 mit einem zweiten Folienverbund 15. Dadurch kann ohne Stillstand ein Folienverbund 14, 15 zumindest einer nachfolgenden Bearbeitungsstation für die Bearbeitung oder Weiterverarbeitung des Folienverbundes 14, 15 zur Verfügung gestellt sein. Anwendungsspezifisch kann gemäß Figur 1 vorgesehen sein, dass der Spleißvorrichtung 11 eine Speichervorrichtung 17 nachgeschaltet ist, so dass die nachfolgenden Bearbeitungsstationen bezüglich deren Bearbeitungsgeschwindigkeit abweichend zur Spleißvorrichtung 11 sein können und dennoch eine kontinuierliche Bearbeitung des Folienverbundes 14, 15 ermöglicht ist.

Die Spleißvorrichtung 11 gemäß Figur 1 umfasst eine erste Führungswalze 21, über welche der erste Folienverbund 14 von einer Vorratsrolle 22 abgezogen und der Spleißvorrichtung 11 zugeführt wird. Der ersten Führungswalze 21 gegenüberliegend kann eine zweite Führungswalze 23 vorgesehen sein, die mit der Führungswalze 21 ein erstes Führungswalzenpaar 24 bildet.

Die Spleißvorrichtung 11 umfasst eine weitere Führungswalze 25, über welche der zweite Folienverbund 15 von einer Vorratsrolle 26 abgezogen und der Spleißvorrichtung 11 zugeführt wird. Dieser Führungswalze 25 kann eine zweite Führungswalze 27 gegenüberliegend zugeordnet sein. Diese können ein zweites Führungswalzenpaar 28 bilden. Zumindest die Führungswalze 21 und die Führungswalze 25 sind angetrieben und beabstandet zueinander angeordnet, so dass der erste Folienverbund 14 und der zweite Folienverbund 15 unabhängig und getrennt voneinander zugeführt werden können. Den Führungswalzen 21, 25 nachgeschaltet ist eine Klemmvorrichtung 29 vorgesehen, zwischen denen ein Arbeitsspalt 31 gebildet ist. Die Klemmvorrichtung 29 besteht aus einander zugeordneten Klemmbacken 30, welche in Figur 1 in einer Öffnungsposition 32 dargestellt sind. In dieser Öffnungsposition ist der erste und/oder zweite Folienverbund 14, 15 frei hindurchführbar.

Die Spleißvorrichtung 11 umfasst des Weiteren eine Klemmhalteeinrichtung 35, welche in Transportrichtung des ersten und/oder zweiten Folienverbundes 14, 15 gesehen der Klemmvorrichtung 29 nachgeschaltet ist. Diese Klemmhalteeinrichtung 35 weist zwei einander gegenüberliegende Klemmblöcke 36 auf. Diese sind in Figur 1 wiederum in einer Öffnungsposition 32 angeordnet, so dass sich dazwischen ein Arbeitsspalt 31 bildet und der erste und/oder zweite Folienverbund 14, 15 frei hindurchführbar ist. Die Klemmblöcke 36 weisen zum Arbeitsspalt 31 ausgerichtet jeweils Vakuumbohrungen auf, so dass beim Anlegen eines Vakuums der erste und/oder zweite Folienverbund 14, 15 an dem Klemmblock 36 anliegt und durch diesen gehalten wird.

Zwischen der Klemmvorrichtung 29 und der Klemmhalteeinrichtung 35 ist eine Schneideinrichtung 38 vorgesehen. Diese Schneideinrichtung 38 ist in einer Ruheposition 39 dargestellt. Diese Schneideinrichtung 38 besteht bevorzugt aus zumindest einem Schneidmesser. Diese Schneideinrichtung 38 ist bevorzugt senkrecht zur Transportebene des ersten und/oder zweiten Folienverbundes 14, 15 verfahrbar.

Der Klemmhalteeinrichtung 35 nachfolgend sind Leitbleche 41 vorgesehen. Diese Leitbleche 41 können jeweils mit Vakuum beaufschlagt werden. Diese Leitbleche 41 führen den ersten oder zweiten Folienverbund 14, 15 von der Klemmhalteeinrichtung 35 in eine nachgeschaltete Verbindungsstation 44.

Die Verbindungsstation 44 umfasst vorzugsweise zwei Halteeinrichtungen 45, die einander gegenüberliegend angeordnet sind und wiederum dazwischenliegend einen Arbeitsspalt 31 bilden. Die Halteeinrichtungen 45 sind bevorzugt als Vakuumwalzen ausgebildet. Die Spleißvorrichtung 11 wird nachfolgend anhand der Vakuumwalzen 45 beispielhaft beschrieben, ohne darauf beschränkt zu sein. Die Vakuumwalzen 45 sind gegenläufig zueinander angetrieben, so dass der erste und/oder zweite Folienverbund 14, 15 in Transportrichtung verfahren werden kann. Insbesondere wird der erste und/oder zweite Folienverbund 14, 15 nach der Verbindungsstation 44 aus der Spleißvorrichtung 11 herausgeführt.

Der Spleißvorrichtung 11 nachgeschaltet oder am Ausgang der Spleißvorrichtung 11 kann eine Umlenkrolle 47 vorgesehen sein, um den Folienverbund 14, 15 der Speichervorrichtung 17 und/oder einer weiteren Bearbeitungsstation, die nicht dargestellt ist, zuzuführen.

Die Vakuumwalze 45 der Verbindungsstation 44 weist bevorzugt an deren Außenumfang eine Gummierung auf. In der Mantelfläche der Vakuumwalze 45 bzw. in der Gummierung der Vakuumwalze 45 sind Poren oder Bohrungen enthalten, so dass die äußere Mantelfläche der Vakuumwalze 45 mit einem Unterdruck beaufschlagbar ist. Auf dieser Vakuumwalze 45 kann ein Verbindungselement 49 positioniert werden. Dieses Verbindungselement 49 kann beispielsweise als ein Klebestreifen ausgebildet sein, der mit seiner klebefreien Rückseite an der Mantelfläche der Vakuumwalze 45 anliegt und durch das Vakuum gehalten wird. Die Klebeschicht wird bei einer Drehbewegung in Transportrichtung der Vakuumwalze 45 in den Arbeitsspalt 31 geführt.

Das Spleißen eines Endes des ersten Folienverbundes 14 mit einem Anfang des zweiten Folienverbundes 15 wird nachfolgend anhand der Figuren 1 bis 5 näher beschrieben.

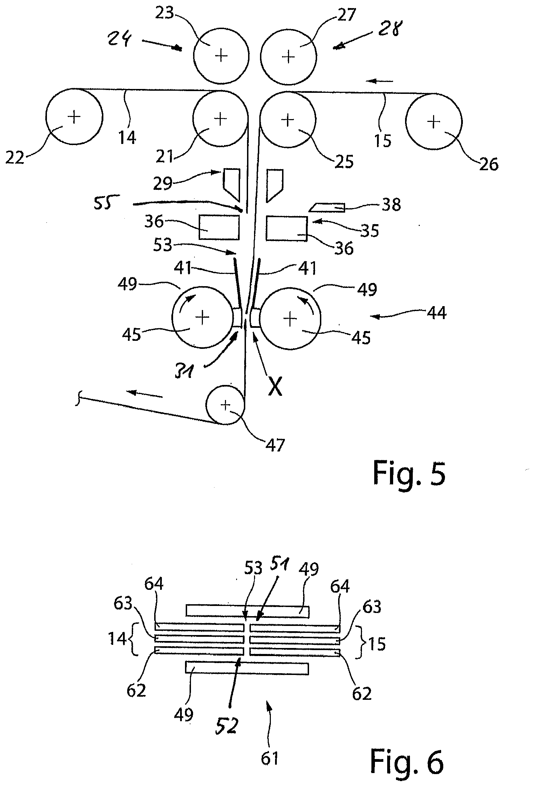

Der erste Folienverbund 14 ist durch die Spleißvorrichtung 11 vollständig hindurchgeführt. Sobald vorzugsweise mittels Sensoren festgestellt wird, dass die Vorratsrolle 22 abgearbeitet ist, wird ein Anfang 51 des zweiten Folienverbundes 15 über die Führungswalze 25 der Spleißvorrichtung 11 zugeführt. Dabei wird der Anfang 51 des zweiten Folienverbundes 15 derart zugeführt, dass dieser durch den Arbeitsspalt 31 der Klemmvorrichtung 29 hindurchgeführt wird und im Arbeitsspalt 31 zwischen der Klemmhalteeinrichtung 35 positioniert wird (Figur 1). Vorzugsweise wird vor oder bis zu diesem Zeitpunkt auf der Vakuumwalze 45 das Verbindungselement 49 positioniert. Das Verbindungselement 49 wird in einem separaten und nicht näher dargestellten Arbeitsschritt auf Maß geschnitten. Vorzugsweise entspricht die Länge des Verbindungselementes 49 der Bahnbreite des ersten und/oder zweiten Folienverbundes 14, 15. Die Breite des Verbindungselementes 49 kann in Abhängigkeit der aufzubringenden Haltekraft für die Verbindungsstelle 61 zwischen dem ersten und zweiten Folienverbund 14, 15 ausgebildet sein (Figur 6).

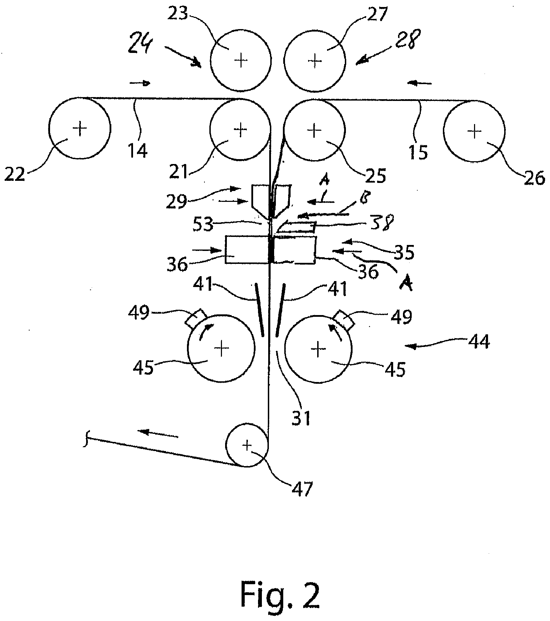

Ausgehend von diesem ersten Arbeitsschritt gemäß Figur 1 wird in einem nachfolgenden Arbeitsschritt die Klemmvorrichtung 29 und die Klemmhalteeinrichtung 35 vorzugsweise gleichzeitig vorzugsweise mit einer Verfahrbewegung gemäß Pfeil A geschlossen, so dass der erste und zweite Folienverbund im jeweiligen Arbeitsspalt 31 geklemmt zueinander gehalten werden (Figur 2). Darauffolgend wird die Schneideinrichtung 38 aktiviert. Gemäß Pfeil B kann ein Schneidmesser verfahren werden. Der erste und zweite Folienverbund 14, 15 werden durch die Schneideinrichtung 38 getrennt und ein gemeinsamer Stoß 53 gebildet. In der Arbeitsposition der Klemmhalteeinrichtung 35 wird ein Unterdruck an den Klemmblöcken 36 angelegt.

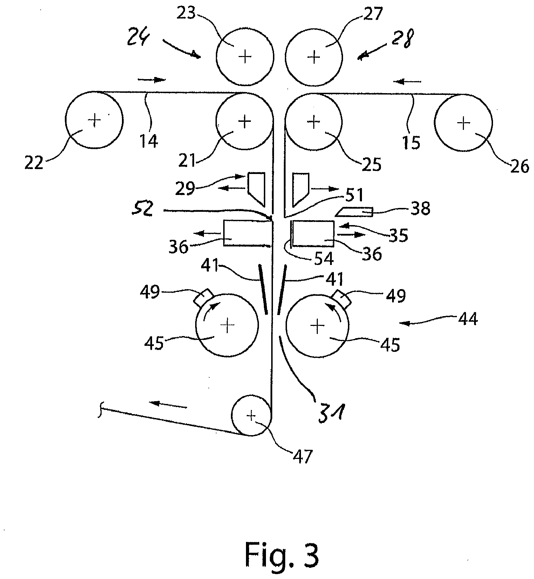

Nach dem Einbringen des Stoßes 53 werden die Klemmvorrichtung 29 und die Klemmhalteeinrichtung 35 wieder in eine Öffnungsposition übergeführt (Figur 3). Durch das Vakuum in den Klemmblöcken 36 wird ein geschnittener Abschnitt 54 vom Anfang 51 des zweiten Folienverbundes 15 gehalten und kann anschließend definiert entsorgt werden. Dadurch kann verhindert werden, dass dieser abgeschnittene Abschnitt 54 eine Störung bei der Weiterverarbeitung des ersten und zweiten Folienverbundes 14, 15 in nachfolgende Stationen bewirkt.

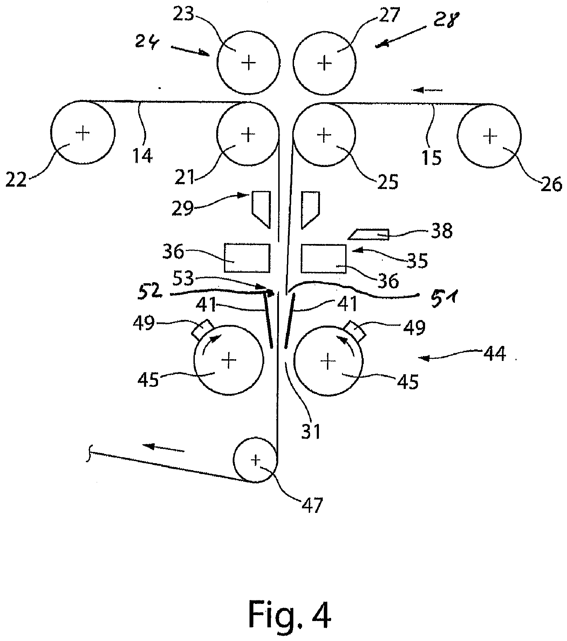

Das Ende 52 des ersten Folienverbundes 14 und der Anfang 51 des zweiten Folienverbundes 15 liegen unmittelbar benachbart zueinander. Durch den gemeinsamen Schnitt können diese bündig aneinander liegen. Ausgehend von dieser Arbeitssituation, die in Figur 3 dargestellt ist, folgt der nachfolgende, in Figur 4 dargestellte Arbeitsschritt. Die Führungswalze 27 und die Vakuumwalzen 45 der Verbindungsstation 44 werden synchron in Transportrichtung angetrieben. Dadurch wird zum einen der zweite Folienverbund 15 in Richtung der Verbindungsstation 44 verfahren und der erste Folienverbund 14 über die Vakuumwalzen 45 weitertransportiert.

Der zwischen dem ersten und zweiten Folienverbund 14, 15 gebildete Stoß 53 wird dabei unterstützend durch die Leitbleche 41 der Verbindungsstation 44 zugeführt. Durch eine Synchronisation der Umfangsgeschwindigkeiten der Vakuumwalzen 45 mit dem jeweils darauf positionierten Verbindungselement 49 und der Zuführbewegung des Stoßes 53 wird erreicht, dass die Verbindungselement 49 in den Arbeitsspalt 31 zeitgleich mit dem Stoß 53 übergeführt sind. Die Verbindungselemente 49 können jeweils an der Außenseite den Stoß 53 überbrückend an dem Ende 52 des ersten Folienverbundes 14 und dem Anfang 51 des zweiten Folienverbundes 15 angebracht, insbesondere angeklebt, werden. Dies ist in Figur 5 dargestellt. Darauffolgend werden die Führungswalze 27 und die Vakuumwalzen 45 der Verbindungsstation 44 weiterhin synchron angetrieben, und die Verbindungsstelle 61, welche den ersten und zweiten Folienverbund 14, 15 verbindet, wird aus der Spleißvorrichtung 11 herausgeführt.

Nach dem Einbringen des Stoßes 53 kann die Vorratsrolle 22 des ersten Folienverbundes 14 aufgewickelt werden, so dass das verbleibende zweite Ende 55 des ersten Folienverbundes 14 (Figur 5) aus der Spleißvorrichtung 11 herausgeführt wird, um darauffolgend einen Wechsel der Vorratsrolle mit einem neuen Folienverbund vorzunehmen. Die darauffolgende Spleißung erfolgt spiegelbildlich zu den vorbeschriebenen Arbeitsschritten gemäß Figuren 1 bis 5.

In Figur 6 ist eine schematische Schnittansicht der Verbindungsstelle 61 dargestellt, welche mit der Verbindungsstation 44 hergestellt wird. Durch diese Verbindungsstelle 61 ist ein Ende 52 des ersten Folienverbundes 14 mit dem Anfang 51 des zweiten Folienverbundes 15 verbunden. Der Folienverbund 14, 15 ist bevorzugt dreilagig aufgebaut. Dieser umfasst eine Trägerschicht 62, auf welcher eine Polymerschicht 63 aufgebracht ist. Bei dieser Polymerschicht 63 kann es sich um ein Photopolymer handeln, insbesondere um eine Polymerschicht mit darin eingebrachten Hologrammen. Diese Polymerschicht 63 ist vor Beschädigungen durch eine Schutzschicht 64 geschützt.

Bei der Herstellung des Stoßes 53, wie dies in Figur 2 beschrieben ist, werden gleichzeitig alle drei Schichten des ersten Folienverbundes 14 und des zweiten Folienverbundes 15 durchtrennt. Dadurch entsteht eine deckungsgleiche Stirnkante an dem jeweiligen Folienverbund 14, 15. Durch das Einbringen des gemeinsamen Stoßes 53 können diese an den jeweiligen Stirnseiten bündig aneinanderliegen. Jeweils an einer Außenseite ist bevorzugt das Verbindungselement 49 aufgebracht. Dieses überdeckt den Stoß 53 und erstreckt sich darüber hinaus, um eine hinreichende Haltekraft zur Verbindung des Stoßes 53 zu ermöglichen. Dadurch kann ein spaltfreier Übergang zwischen dem ersten und zweiten Folienverbund 14, 15 geschaffen werden.

Diese Spleißvorrichtung 11 weist den Vorteil auf, dass solche Dreifachverbünde durch einfaches Aneinanderreihen miteinander verbunden werden. Ein ein- oder beidseitiges Ablösen der Schutz- und/oder Trägerschicht zum Verbinden der mittleren Polymerschicht ist nicht erforderlich. Diese Spleißvorrichtung 11 kann auch ein einlagiges Bahnmaterial oder einen mehrlagigen Folienverbund abweichend zu dem dargestellten Dreifachverbund verarbeiten.

**Bezugszeichenliste**

| | | |
|---|---|---|
| 11. Spleißvorrichtung | 35. Klemmhalteeinrichtung | 59. |
| 12. | 36. Klemmblöcke | 60. |
| 13. | 37. | 61. Verbindungsstelle |
| 14. Erster Folienverbund | 38. Schneideinrichtung | 62. Trägerschicht |
| 15. Zweiter Folienverbund | 39. Ruheposition | 63. Polymerschicht |
| 16. | 40. | 64. Schutzschicht |
| 17. Speichervorrichtung | 41. Leitblech | 65. |
| 18. | 42. | 66. |
| 19. | 43. | 67. |
| 20. | 44. Verbindungsstation | 68. |
| 21. Führungswalze | 45. Vakuumwalze | 69. |
| 22. Vorratsrolle | 46. | 70. |
| 23. Zweite Führungsrolle | 47. Umlenkrolle | 71. |
| 24. 1. Führungswalzenpaar | 48. | 72. |
| 25. Führungswalze | 49. Verbindungselement | 73. |
| 26. Vorratsrolle | 50. | 74. |
| 27. Zweite Führungswalze | 51 Anfang von 15 | 75. |
| 28. 2. Führungswalzenpaar | 52. Ende von 14 | 76 |
| 29. Klemmvorrichtung | 53. Stoß | 77. |
| 30. Klemmbacke | 54. Abschnitt | 78. |
| 31. Arbeitsspalt | 55. | 79. |
| 32. Öffnungsposition | 56. Zweites Ende von 14 | 80. |
| 33. | 57. | 81. |
| 34. | 58. | 82. |

## Patentansprüche

1. Verfahren zum Spleißen eines Endes (52) eines ersten Folienverbundes (14) mit einem Anfang (51) eines zweiten Folienverbundes (15) in einer Spleißvorrichtung (11),
- bei dem der erste Folienverbund (14) durch die Spleißvorrichtung (11) hindurchgeführt ist und der Anfang (51) des zweiten Folienverbundes (15) der Spleißvorrichtung (11) zugeführt wird,
- bei dem der erste und zweite Folienverbund (14, 15) auf Stoß (53) geschnitten werden,
- bei dem der durch das Ende (52) des ersten Folienverbundes (14) und den Anfang (51) des zweiten Folienverbundes (15) gebildete Stoß (53) einer Verbindungsstation (44) zugeführt werden, und
- bei dem in der Verbindungsstation (44) ein- oder beidseitig an einer Außenseite des ersten und zweiten Folienverbundes (14, 15) und den Stoß (53) des ersten und zweiten Folienverbundes (14, 15) überdeckend ein Verbindungselement (49) aufgebracht wird,
**dadurch gekennzeichnet,**
- **dass** der erste Folienverbund (14) durch eine Klemmvorrichtung (29) und in Transportrichtung nachfolgend durch eine Klemmhalteeinrichtung (35) und durch die Verbindungsstation (44) hindurchgeführt ist und dass der zweite Folienverbund (15) durch die Klemmvorrichtung (29) hindurchgeführt und der nachfolgenden Klemmhalteeinrichtung (35) zugeführt wird, sodass zumindest der Anfang (51) des zweiten Folienverbundes (15) in der Klemmhalteeinrichtung (35) positioniert wird, und
- **dass** zwischen der Klemmvorrichtung (29) und der Klemmhalteeinrichtung (35) die Schneideinrichtung (38) positioniert wird und der erste und zweite Folienverbund (14, 15) nach dem Schließen der Klemmvorrichtung (29) und der Klemmhalteeinrichtung (35) gemeinsam mit der Schneideinrichtung (38) auf den Stoß (53) geschnitten werden.

2. Verfahren nach Anspruch 1, **dadurch gekennzeichnet, dass** die Verbindungsstation (44) eine Halteeinrichtung (45) und ein Gegenhalteelement oder zwei einander gegenüberliegende Halteeinrichtungen (45) umfasst, die einen Arbeitsspalt (31) bilden, in den der erste und zweite Folienverbund (14, 15) hineingeführt werden und das zumindest eine Verbindungselement (49) mit einer Haltekraft an der Halteeinrichtung (45) bis zum Einbringen in den Arbeitsspalt (31) gehalten wird, und vorzugsweise die an der Halteeinrichtung (45) erzeugte Haltekraft abgeschalten wird, sobald das Verbindungselement (49) in den Arbeitsspalt (31) übergeführt ist.

3. Verfahren nach Anspruch 2, **dadurch gekennzeichnet, dass** die Halteeinrichtung (45) als Vakuumwalze ausgebildet wird, bei der durch Anlegen eines Unterdrucks die Haltekraft zur Aufnahme des zumindest einen Verbindungselementes (49) an einer Umfangsfläche der Vakuumwalze erzeugt wird.

4. Verfahren nach Anspruch 3, **dadurch gekennzeichnet, dass** als Verbindungselement (49) ein Klebestreifen, vorzugsweise mit einer einseitigen Klebefläche, auf den Stoß (53) des ersten und zweiten Folienverbundes (14, 15) aufgebracht wird, und vorzugsweise der Klebestreifen an seiner nicht klebrigen Außenseite von der Vakuumwalze (45) gehalten wird.

5. Verfahren nach einem der vorhergehenden Ansprüche, **dadurch gekennzeichnet, dass** in der Verbindungsstation (44) beidseitig und gleichzeitig jeweils das Verbindungselement (49) an der Außenseite des Stoßes (53) des ersten und zweiten Folienverbunds (14, 15) aufgebracht wird.

6. Verfahren nach Anspruch 1, **dadurch gekennzeichnet, dass** nach dem Schneiden des Stoßes (53) die Klemmvorrichtung (29) und die Klemmhalteeinrichtung (35) geöffnet werden, wobei einer der beiden Klemmblöcke (36) der Klemmhalteeinrichtung (35) mit Unterdruck beaufschlagt wird und einen geschnittenen Abschnitt (54) am Anfang (51) des zweiten Folienverbundes (15) von der Schnittstelle entfernt.

7. Verfahren nach einem der Ansprüche 1 oder 6, **dadurch gekennzeichnet, dass** der Stoß (53) zwischen dem ersten und zweiten Folienverbund (14, 15) durch Leitbleche (41), die vorzugsweise mit Unterdruck beaufschlagt werden, von der Klemmhalteeinrichtung (35) in die Verbindungsstation (45) übergeführt wird.

8. Verfahren nach einem der vorhergehenden Ansprüche 3-7, **dadurch gekennzeichnet, dass** beim Überführen des Stoßes (53) von der Schnittstelle in die Verbindungsstation (44) eine Zuführwalze (27) oder Zuführwalzenpaar (28) des zweiten Folienverbundes (15) und die Vakuumwalzen (45) der Verbindungsstation (44) mit einer synchronen Bahngeschwindigkeit angesteuert werden.

9. Verfahren nach einem der vorhergehenden Ansprüche, **dadurch gekennzeichnet, dass** der Spleißvorrichtung (11) ein erster und zweiter Folienverbund (14, 15) zugeführt wird, der ein- oder mehrlagig ausgebildet ist, insbesondere als ein Dreifachverbund ausgebildet ist, der eine Trägerschicht (62), eine Polymerschicht (63) und eine Schutzschicht (64) umfasst.

10. Spleißvorrichtung zum Spleißen von einem Ende eines ersten Folienverbundes (14) mit einem Anfang (51) eines zweiten Folienverbundes (15),
- mit zumindest einer Schneideinrichtung (38), durch welche ein gemeinsamer Stoß (53) zwischen dem ersten und zweiten Folienverbund (14, 15) herstellbar ist, und
- mit einer Verbindungsstation (44), die zumindest ein Verbindungselement (49) ein- oder beidseitig dem Stoß (53) des ersten und zweiten Folienverbundes (14, 15) zuführt und den Stoß (53) überdeckend aufbringt,
**dadurch gekennzeichnet,**
- **dass** der erste Folienverbund (14) durch eine Klemmvorrichtung (29) und in Transportrichtung nachfolgend durch eine Klemmhalteeinrichtung (35) und durch die Verbindungsstation (44) hindurchführbar ist und dass der zweite Folienverbund (15) durch die Klemmvorrichtung (29) hindurchführbar und der nachfolgenden Klemmhalteeinrichtung (35) zuführbar ist, sodass zumindest der Anfang (51) des zweiten Folienverbundes (15) in der Klemmhalteeinrichtung (35) positioniert ist, und
- **dass** zwischen der Klemmvorrichtung (29) und der Klemmhalteeinrichtung (35) die Schneideinrichtung (38) positioniert ist und der erste und zweite Folienverbund (14, 15) durch die Klemmvorrichtung (29) und die Klemmhalteeinrichtung (35) gemeinsam geklemmt gehalten sind und mit der Schneideinrichtung (38) der Stoß (53) herstellbar ist.

11. Spleißvorrichtung nach Anspruch 10, **dadurch gekennzeichnet, dass** die Verbindungsstation (44) eine Halteeinrichtung (45) und ein Gegenhalteelement oder zwei einander gegenüberliegende Halteeinrichtungen (45) aufweist, zwischen denen ein Arbeitsspalt (31) zum Aufbringen des zumindest einen Verbindungselementes (49) auf den Stoß (53) des ersten und zweiten Folienverbundes (14, 15) gebildet ist, und vorzugsweise dass die Halteeinrichtung (45) als eine Vakuumwalze ausgebildet ist, welche eine äußere Gummierung als Mantelfläche aufweist, welche eine Vielzahl von Durchgangsbohrungen umfasst, und/oder dass die Halteeinrichtung (45) eine Markierung und/oder ein Ausrichtelement zum Bestücken des Verbindungselementes (49) aufweist.

12. Spleißvorrichtung nach einem der Ansprüche 10 oder 11, **dadurch gekennzeichnet, dass** der Schneideinrichtung (38) die Klemmhalteeinrichtung (35) zugeordnet ist, in Transportrichtung des ersten und zweiten Folienverbundes (14, 15) nachgeschaltet ist, welche in eine Öffnungs- oder Schließposition überführbar ist, und dass in Transportrichtung des ersten und zweiten Folienverbundes (14, 15) gesehen vor der Schneideinrichtung (38) die Klemmvorrichtung (29) vorgesehen ist, welche in eine Öffnungs- und Schließposition überführbar ist, und vorzugsweise zwischen der Klemmhalteeinrichtung (35) und der Verbindungsstation (44) einander gegenüberliegende Leitbleche (41) vorgesehen sind, welche vorzugsweise mit Unterdruck beaufschlagbar sind.

13. Spleißvorrichtung nach einem der Ansprüche 11 bis 12, **dadurch gekennzeichnet, dass** jeweils zumindest eine Führungswalze (21, 25) für den ersten Folienverbund (14) und den zweiten Folienverbund (15) vorgesehen ist, welche der Schneideinrichtung (38) vorgeschalten sind und dass die Führungswalze (21, 25) und die Vakuumwalzen (45) der Verbindungsstation (44) synchron ansteuerbar sind.

## Claims

1. A method for splicing an end (52) of a first film composite (14) with a beginning (51) of a second film composite (15) in a splicing device (11),
- wherein the first film composite (14) has been passed through the splicing device (11) and the beginning (51) of the second film composite (15) is fed to the splicing device (11),
- wherein the first and the second film composites (14, 15) are cut so as to form a butt joint (53),
- wherein the butt joint (53) formed by the end (52) of the first film composite (14) and the beginning (51) of the second film composite (15) are fed to a connecting station (44), and
- wherein in the connecting station (44), a connecting element (49) is applied, on one side or on both sides, onto the outer faces of the first and second film composites (14, 15) in a manner so as to overlap the butt joint (53) between the first and second film composites (14, 15),
**characterised in that**
- the first film composite (14) has been passed through a clamping device (29) and, downstream thereof in the transport direction, through a clamping and holding device (35) and through the connecting station (44), and **in that** the second film composite (15) is passed through the clamping device (29) and is fed to the subsequent clamping and holding device (35) in such a manner that at least the beginning (51) of the second film composite (15) is positioned within the clamping and holding device (35), and
- the cutting device (38) is positioned between the clamping device (29) and the clamping and holding device (35) and the first and second film composites (14, 15) are cut jointly so as to form the butt joint (53) using said cutting device (38) once the clamping device (29) and the clamping and holding device (35) have been closed.

2. The method as claimed in claim 1, **characterised in that** the connecting station (44) comprises a retaining device (45) and a counter-holding element, or two opposing retaining devices (45), which form a working gap (31) into which the first and second film composites (14, 15) are introduced, and **in that** the at least one connecting element (49) is retained on the retaining device (45) by a retention force until it is inserted into the working gap (31), and **in that** preferably the retention force produced at the retaining device (45) will be turned off, once the connecting element (49) has been transferred to the working gap (31).

3. The method as claimed in claim 2, **characterised in that** the retaining device (45) is realised in the form of a vacuum roller on which negative pressure is applied to create the retention force required for accommodating the at least one connecting element (49) on a circumferential surface of said vacuum roller.

4. The method as claimed in claim 3, **characterised in that** the connecting element (49) applied onto the butt joint (53) of the first and second film composites (14, 15) is an adhesive strip, preferably one having an adhesive surface on only one side, and **in that** preferably said adhesive strip is retained in position by said vacuum roller (45) on its non-tacky outer surface.

5. The method as claimed in any of the preceding claims, **characterised in that** within the connecting station (44), the connecting element (49) is applied simultaneously on both sides of each of the outer surfaces of the butt joint (53) of the first and second film composites (14, 15).

6. The method as claimed in claim 1, **characterised in that** once the butt joint (53) has been cut, the clamping device (29) and the clamping and holding device (35) are opened, while one of the two clamping blocks (36) of the clamping and holding device (35) has negative pressure applied thereon and removes a cutaway portion (54) at the beginning (51) of the second film composite (15) from the cutting point.

7. The method as claimed in any one of claims 1 or 6, **characterised in that** the butt joint (53) between the first and second film composites (14, 15) is transferred from the clamping and holding device (35) to the connecting station (45) by means of guide plates (41) which are preferably set under negative pressure.

8. The method as claimed in any of the preceding claims 3-7, **characterised in that** when the butt joint (53) is transferred from the cutting point to the connecting station (44), a feed roller (27) or a pair of feed rollers (28) of the second film composite (15) and the vacuum rollers (45) of the connecting station (44) are activated so as to advance with synchronised line speed.

9. The method as claimed in any of the preceding claims, **characterised in that** the splicing device (11) has a first and a second film composite (14, 15) fed thereto which may be realised in the form of a single-layer or of a multi-layer composite, in particular a three-layer composite comprising a support layer (62), a polymer layer (63), and a protective layer (64).

10. A splicing device for splicing an end of a first film composite (14) with a beginning (51) of a second film composite (15),
- having at least one cutting device (38) by means of which a common butt joint (53) between the first and second film composites (14, 15) may be formed, and
- having a connecting station (44) in which at least one connecting element (49) is fed to the butt joint (53) of the first and second film composites (14, 15) from one side or from both sides and is applied thereon in a manner so as to overlap said butt joint (53),
**characterised in that**
- the first film composite (14) may be passed through a clamping device (29) and, downstream thereof in a transport direction, through a clamping and holding device (35) and through the connecting station (44), and **in that** the second film composite (15) may be passed through the clamping device (29) and may be fed to the subsequent clamping and holding device (35) in such a manner that at least the beginning (51) of the second film composite (15) is positioned within the clamping and holding device (35), and
- the cutting device (38) is positioned between the clamping device (29) and the clamping and holding device (35), and **in that** the first and second film composites (14, 15) are jointly maintained in a clamped condition by the clamping device (29) and by the clamping and holding device (35), and **in that** the butt joint (53) may be created using said cutting device (38).

11. The splicing device as claimed in claim 10, **characterised in that** the connecting station (44) has a retaining device (45) and a counter-holding element, or two opposing retaining devices (45), which form a working gap (31) therebetween for applying the at least one connecting element (49) onto the butt joint (53) of the first and second film composites (14, 15), and **in that** the retaining device (45) is preferably realised in the form of a vacuum roller whose lateral surface has a rubber coating which includes a plurality of through holes, and/or **in that** the retaining device (45) has a marking and/or an alignment element for assembling the connecting element (49).

12. The splicing device as claimed in any one of claims 10 or 11, **characterised in that** the cutting device (38) has a clamping and holding device (35) associated therewith which is, in particular, arranged downstream in the transport direction of the first and second film composites (14, 15) and may be moved to an open position or a closed position, and **in that** upstream of said cutting device (38), as seen in a transport direction of the first and second film composites (14, 15), a clamping device (29) is provided which may be moved to an open position and to a closed position, and **in that** preferably between the clamping and holding device (35) and the connecting station (44), opposing guide plates (41) are provided which are preferably apt to be set under negative pressure.

13. The splicing device as claimed in any one of claims 11 to 12, **characterised in that** at least one guide roller (21, 25), arranged upstream of the cutting device (38), is provided for each of the first film composite (14) and the second film composite (15), and **in that** the guide rollers (21, 25) and the vacuum rollers (45) of the connecting station (44) are apt to be activated in such a manner as to advance with synchronised line speed.

## Revendications

1. Procédé destiné à assembler par épissurage, dans un dispositif d'épissurage (11), une extrémité finale (52) d'un premier composite de feuilles (14) à une extrémité initiale (51) d'un deuxième composite de feuilles (15),
- lors duquel le premier composite de feuilles (14) passe par le dispositif d'épissurage (11) et l'extrémité initiale (51) du deuxième composite de feuilles (15) est amenée au dispositif d'épissurage (11),
- lors duquel le premier et le deuxième composite de feuilles (14, 15) sont coupés de manière à former un joint d'about (53),
- lors duquel le joint d'about (53) formé par l'extrémité finale (52) du premier composite de feuilles (14) et l'extrémité initiale (51) du deuxième composite de feuilles (15) est amené à une station d'assemblage (44), et
- lors duquel dans la station d'assemblage (44), un élément d'assemblage (49) est appliqué, d'un seul côté ou des deux côtés, sur une face extérieure du premier et du deuxième composite de feuilles (14, 15), et ce de manière à recouvrir le joint d'about (53) formé par ledit premier et ledit deuxième composite de feuilles (14, 15),
**caractérisé en ce que**
- le premier composite de feuilles (14) passe par un dispositif de serrage (29) et passe ensuite, dans le sens de transport, par un dispositif de maintien par serrage (35) et par la station d'assemblage (44), et **en ce que** le deuxième composite de feuilles (15) passe par le dispositif de serrage (29) et est amené au dispositif de maintien par serrage (35) qui vient juste après de sorte qu'au moins l'extrémité initiale (51) du deuxième composite de feuilles (15) est positionnée dans le dispositif de maintien par serrage (35), et
- le dispositif de coupe (38) est positionné entre le dispositif de serrage (29) et le dispositif de maintien par serrage (35) et que, après la fermeture du dispositif de serrage (29) et du dispositif de maintien par serrage (35), le premier et le deuxième composite de feuilles (14, 15) sont coupés conjointement par le dispositif de coupe (38) de manière à former le joint d'about (53).

2. Procédé selon la revendication 1, **caractérisé en ce que** la station d'assemblage (44) comprend un dispositif de maintien (45) et un élément de contre-maintien ou deux dispositifs de maintien (45) situés à l'opposé l'un de l'autre qui forment une fente de travail (31) dans laquelle sont introduits le premier et le deuxième composite de feuilles (14, 15), et **en ce que** ledit au moins un élément d'assemblage (49) est maintenu grâce à une force de maintien contre le dispositif de maintien (45) jusqu'à ce que soit réalisée l'insertion dans la fente de travail (31), et **en ce que** de préférence la force de maintien appliquée au niveau du dispositif de maintien (45) est mise à l'arrêt dès que l'élément d'assemblage (49) est passé dans la fente de travail (31).

3. Procédé selon la revendication 2, **caractérisé en ce que** le dispositif de maintien (45) est réalisé en tant que cylindre à vide dans lequel la force de maintien destinée à recevoir ledit au moins un élément d'assemblage (49) est générée au niveau d'une surface circonférentielle du cylindre à vide grâce à l'application d'une pression négative.

4. Procédé selon la revendication 3, **caractérisé en ce qu'**une bande adhésive ayant de préférence une surface adhésive sur une seule face est appliquée en tant qu'élément d'assemblage (49) sur le joint d'about (53) formé par le premier et le deuxième composite de feuilles (14, 15), et **en ce que** de préférence la bande adhésive est maintenue au niveau de sa face extérieure non adhésive par le cylindre à vide (45).

5. Procédé selon l'une quelconque des revendications précédentes, **caractérisé en ce que** dans la station d'assemblage (44), l'élément d'assemblage (49) est appliqué simultanément des deux côtés, et ce respectivement sur la face extérieure du joint d'about (53) formé par le premier et le deuxième composite de feuilles (14, 15).

6. Procédé selon la revendication 1, **caractérisé en ce qu'**après la coupe du joint d'about (53), le dispositif de serrage (29) et le dispositif de maintien par serrage (35) sont ouverts, l'un des deux blocs de serrage (36) du dispositif de maintien par serrage (35) étant soumis à une pression négative et une partie (54) coupée au niveau de l'extrémité initiale (51) du deuxième composite de feuilles (15) étant retirée du point de coupe.

7. Procédé selon l'une quelconque des revendications 1 ou 6, **caractérisé en ce que** le joint d'about (53) entre le premier et le deuxième composite de feuilles (14, 15) quitte le dispositif de maintien par serrage (35) pour passer dans la station d'assemblage (45) grâce à des tôles déflectrices (41) qui sont de préférence soumises à une pression négative.

8. Procédé selon l'une quelconque des revendications 3-7, **caractérisé en ce que** lorsque le joint d'about (53) passe du point de coupe à la station d'assemblage (44), un cylindre d'amenée (27) ou une paire de cylindres d'amenée (28) du deuxième composite de feuilles (15) et les cylindres à vide (45) de la station d'assemblage (44) sont activés de manière à présenter une vitesse de bande synchronisée.

9. Procédé selon l'une quelconque des revendications précédentes, **caractérisé en ce qu'**un premier et un deuxième composite de feuilles (14, 15) formés d'une ou de plusieurs couches, formés en particulier en tant que tricomposites comprenant une couche support (62), une couche de polymère (63) et une couche protectrice (64), sont amenés au dispositif d'épissurage (11).

10. Dispositif d'épissurage destiné à assembler par épissurage une extrémité finale d'un premier composite de feuilles (14) à une extrémité initiale (51) d'un deuxième composite de feuilles (15),
- pourvu d'au moins un dispositif de coupe (38) grâce auquel il est possible de fabriquer un joint d'about commun (53) entre le premier et le deuxième composite de feuilles (14, 15), et
- pourvu d'une station d'assemblage (44) qui amène d'un seul côté ou des deux côtés au moins un élément d'assemblage (49) au joint d'about (53) formé par le premier et le deuxième composite de feuilles (14, 15) et l'applique de manière à recouvrir ledit joint d'about (53),
**caractérisé en ce que**
- le premier composite de feuilles (14) peut passer par un dispositif de serrage (29) et peut ensuite passer, dans le sens de transport, par un dispositif de maintien par serrage (35) et par la station d'assemblage (44), et **en ce que** le deuxième composite de feuilles (15) peut passer par le dispositif de serrage (29) et peut être amené au dispositif de maintien par serrage (35) qui vient juste après de sorte qu'au moins l'extrémité initiale (51) du deuxième composite de feuilles (15) est positionnée dans le dispositif de maintien par serrage (35), et
- le dispositif de coupe (38) est positionné entre le dispositif de serrage (29) et le dispositif de maintien par serrage (35) et que le premier et le deuxième composite de feuilles (14, 15) sont maintenus ensemble par serrage par ledit dispositif de serrage (29) et ledit dispositif de maintien par serrage (35) et que le joint d'about (53) peut être réalisé grâce au dispositif de coupe (38).

11. Dispositif d'épissurage selon la revendication 10, **caractérisé en ce que** la station d'assemblage (44) présente un dispositif de maintien (45) et un élément de contre-maintien ou deux dispositifs de maintien (45) disposés à l'opposé l'un de l'autre entre lesquels est formée une fente de travail (31) destiné à appliquer ledit au moins un élément d'assemblage (49) sur le joint d'about (53) formé par le premier et le deuxième composite de feuilles (14, 15), et **en ce que** de préférence le dispositif de maintien (45) est formé en tant que cylindre à vide qui présente comme surface latérale un revêtement extérieur en caoutchouc qui comprend une pluralité de trous de passage, et/ou **en ce que** le dispositif de maintien (45) présente un marquage et/ou un élément d'alignement en vue de mettre en place l'élément d'assemblage (49).

12. Dispositif d'épissurage selon l'une quelconque des revendications 10 ou 11, **caractérisé en ce qu'**au dispositif de coupe (38) est affecté un dispositif de maintien par serrage (35) qui est en particulier placé en aval dans le sens de transport du premier et du deuxième composite de feuilles (14, 15) et qui peut passer dans une position d'ouverture ou de fermeture, et **en ce qu'**un dispositif de serrage (29) qui peut passer dans une position d'ouverture et une position de fermeture est prévu, vu dans le sens de transport du premier et du deuxième composite de feuilles (14, 15), avant le dispositif de coupe (38), et **en ce que** de préférence entre le dispositif de maintien par serrage (35) et la station d'assemblage (44) sont prévues des tôles déflectrices (41) situées à l'opposé l'une de l'autre qui peuvent être de préférence soumises à une pression négative.

13. Dispositif d'épissurage selon l'une quelconque des revendications 11 à 12, **caractérisé en ce que** pour le premier composite de feuilles (14) et pour le deuxième composite de feuilles (15) est prévu respectivement au moins un cylindre de guidage (21, 15) qui est placé en amont du dispositif de coupe (38), et **en ce que** le cylindre de guidage (21, 25) et les cylindres à vide (45) de la station d'assemblage (44) peuvent être activés de manière synchronisée.
